# EUROPEAN PATENT APPLICATION

(11) **EP 3 750 420 A1**
(43) Date of publication of application: **16.12.2020**
(21) Application number: 19179881.8
(22) Date of filing: 13.06.2019
(51) Int. Cl.: A24F 47/00, H04M 1/725, H04W 12/08

(54) **A SYSTEM AND METHOD FOR MANAGING A SMOKING SUBSTITUTE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A system for managing a smoking substitute device, the system comprising a smoking substitute device comprising a control unit, a memory configured to store firmware for operating the smoking substitute device, and a device-specific encryption key, and a communications interface. The system further comprises a mobile device on which an application is installed, wherein the smoking substitute device is in wireless communication with the mobile device via the communications interface. The system further comprises a server configured to be communicable with the mobile device via the application. The server is configured to transmit a firmware update notification to the application on the mobile device, the firmware update notification including a firmware image location identifier and a firmware update message that is encrypted with device-specific encryption key. The application on the mobile device is configured to obtain an encrypted firmware image using the firmware image location identifier and to communicate the encrypted firmware image and firmware update message to the smoking substitute device. The firmware update message includes a firmware key for decrypting the encrypted firmware image.

## Description

### TECHNICAL FIELD

The present invention relates to smoking substitute and particularly, although not exclusively, to controlling and updating operation of a smoking substitute device.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other.

The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present inventor(s) have observed that, as smoking substitute devices become more sophisticated, the management of smoking substitute devices should also improve. In particular, when smoking substitute devices have software installed, for controlling operation of the device, that software requires management. Moreover, the present inventor(s) have observed that potential security concerns must be taken into account, in the management of software.

The present invention has been devised in light of the above considerations.

### Summary of the Invention

At its most general, the present invention provides a device, system and method that enable firmware updates to be provided for a smoking substitute device in a secure, streamlined and reliable manner.

The invention enables a server to provide a firmware update, comprising a new firmware version that may comprise a new firmware image, to one or more smoking substitute devices. The new firmware image may be communication directly to the smoking substitute device from an application server, e.g. over a wireless communication link established between the application server and the smoking substitute device. Alternatively, the new firmware image may be provided via an application installed on a mobile device. The application may comprise one or more application instances, each running on a different respective mobile device. An application or application instance may be configured to communicate with more than one smoking substitute device.

The application server is part of a back end system, which may include a secure portion (e.g. signing server or the like) that is has knowledge or access to a set of device-specific encryption keys, wherein each of said device-specific encryption keys is unique to a single smoking substitute device. Each smoking substitute device is configured to store its device-specific encryption key in a secure location, within its memory. No intermediate device or other entity between the smoking substitute device and the back end system has access to the device-specific encryption key. For example, the application is configured not to have access to the set of device-specific encryption keys. Moreover, the server and the smoking substitute device are configured not to transmit, or provide access to, the device-specific encryption key(s), to any other device, application or entity.

The server can use the set of device-specific encryption keys in order to encrypt a part of a firmware update notification, which is intended for updating the firmware on one or more smoking substitute devices, which the server has identified as requiring or being permitted to obtain the firmware update. That part of the firmware update notification is encrypted differently for each smoking substitute device, using the respective device-specific encryption keys.

The server does not have to encrypt the actual firmware (i.e. the new firmware version that may comprise a new firmware image) differently for each smoking substitute device. Instead, it applies a single firmware encryption key to the new firmware version, to produce a single encrypted new firmware version, which is provided to all of the smoking substitute devices, via the application. It then stores the single firmware encryption key in a part of the firmware update notification referred to herein as a firmware update message. The device-specific encryption keys are applied to the firmware update message. The resulting encrypted firmware update notifications are applicable to, and can be transmitted to, the different respective smoking substitute devices, according to which device-specific key has been applied to which notification. But the same single encrypted new firmware image can be transmitted to all of the smoking substitute devices, because no device can decrypt the encrypted new firmware image without accessing the firmware encryption key, and that firmware encryption key is securely stored in a part of the firmware update notification that has been encrypted on a device-by-device basis, using the device-specific encryption keys that are known only to the server and to the individual respective devices.

Therefore, only the smoking substitute devices that have been identified by the server as requiring (or being permitted to obtain) the firmware update will be able to access, decrypt and use that firmware update. Moreover, each device will only be able to access the firmware update via the specific firmware update notification that the server has identified as being intended for that device - it cannot use a different firmware update notification that was intended for a second, different smoking substitute device, even if that second, different smoking substitute device has also been identified by the server as an intended recipient of the same firmware update.

Therefore, a highly secure but computationally streamlined method for updating the firmware on a smoking substitute device is provided.

The smoking substitute device can be configured to run a verification process on a new firmware image that it has obtained from the application server, via an application. It can also send confirmation of firmware update success via a wireless message to the mobile device, in which it transmits an identifier of the version of the firmware that it is now running. The application server can, when it receives that confirmation via the application, respond with a command to set the secure time on the device.

The invention relates in particular to network-enabled smoking substitute devices, where in a network-enabled device has a wireless interface for communicating with the wireless interface of another device. For example, the other device may be a mobile device such as a mobile phone, smartphone, laptop computer or tablet computer or a television or gaming device. The wireless interface may comprise any suitable type of wireless communication interface, or terminal, for example a Wi-Fi or Bluetooth™ or Bluetooth™ Low Energy (BLE) interface. The wireless interface may be configured to establish a communication link between the smoking substitute device and an application server.

According to a first aspect of the invention, there is provided a system for managing a smoking substitute device, the system comprising: a smoking substitute device comprising: a control unit; a memory configured to store firmware for operating the smoking substitute device and a device-specific encryption key; and a communications interface. The system further comprises an application server configured to communicate to the smoking substitute device a firmware update message that is encrypted with the device-specific encryption key, wherein the smoking substitute device is configured to obtain an encrypted firmware image, wherein the firmware update message includes a firmware key for decrypting the encrypted firmware image, and wherein the smoking substitute device is configured to use the device-specific encryption key to decrypt the firmware update message, to obtain the firmware key for decrypting the encrypted firmware image.

The smoking substitute device may be configured to use the device-specific encryption key to decrypt the firmware update message, in order to obtain the firmware key for decrypting the encrypted firmware image. The smoking substitute device may be further configured to: decrypt the encrypted firmware image using the firmware key; and update the firmware for operating the smoking substitute device using the decrypted firmware image.

The device-specific encryption key may be different to the firmware (encryption) key. For example, they may be of different respective forms and/or they may have been created in accordance with different respective encryption protocols.

The memory of the smoking substitute device may comprise a non-volatile memory, for example a flash memory. The smoking substitute device may be configured so that the step of updating the firmware for operating the smoking substitute device comprises using the decrypted firmware image in order to overwrite an invalid previously-stored firmware image or to overwrite the oldest previously-stored firmware image, stored on the memory of the smoking substitute device.

The memory of the smoking substitute device may comprise more than one sub-section or portion. The device-specific encryption key may be stored in a memory portion that is distinct from a memory portion in which the firmware for the device is stored.

The firmware may be updated multiple times, for the same smoking substitute device.

The smoking substitute device may be in direct communication with the application server (e.g. via a wireless communication link or other suitable connection), whereby the firmware update process is handled directly using communications between those entities.

However, in another arrangement, the system may further comprises a mobile device on which an application is installed, wherein the smoking substitute device is in wireless communication with the mobile device via the communications interface. The application server may be configured to communicate with the mobile device via the application.

The application server may be configured to transmit a firmware update notification to the application on the mobile device or to the smoking substitute device. The firmware update notification may include a firmware image location identifier and the firmware update message that is encrypted with the device-specific encryption key. The application on the mobile device may be configured to: obtain an encrypted firmware image using the firmware image location identifier, and communicate the encrypted firmware image and firmware update message to the smoking substitute device.

The firmware image location identifier may comprise, for example, a Uniform Resource Locator (URL). A URL, which is also referred to as a 'web address' or a 'link', is a web resource that specifies its location on a computer network and a mechanism for retrieving it. For example, the firmware image location identifier may be a Content Delivery Network (CDN) URL. In other examples, the encrypted firmware image may be part of the firmware update notification transmitted by the application server.

The smoking substitute device is further configured to: verify the update firmware using identification data in the firmware update message; and report an outcome of verification, e.g. to the application or application server. The smoking substitute device may thus perform a firmware verification process, after it has used the decrypted firmware image in order to update the firmware for operating the smoking substitute device. The control unit of the smoking substitute device may first reboot, or restart, the device, before the firmware verification process is performed.

The smoking substitute device may be configured to report an outcome of the firmware verification process. For example, the smoking substitute device may have a bonded wireless communication link with the mobile device or the application server, and wherein the outcome of verification is reported in a hello message sent via the communication interface. The hello message may be a message of the type used to establish and maintain an active wireless connection between the two devices.

The application server may issue a set secure time command, to be transmitted to the smoking substitute device, either directly or via the application. For example, the smoking substitute device may, in its message, transmit a firmware version number, to identify the version of the firmware that it is currently running. The application server may read the firmware version number from the message and detect a change in version, as compared to the version that the smoking substitute device had most recently transmitted. This change in firmware version number may trigger the application to relay a 'firmware update successful' update to server.

The application server may form part of a back end (server side) system that comprises more than one portion or sub-section. For example, it may comprise a signing server that is responsible for encrypting the firmware and/or encrypting parts of the firmware update notifications, that are to be provided to the smoking substitute device(s) e.g. via the application(s). In contrast to the signing server, the application server may not be responsible for encrypting or decrypting data but be responsible for communicating with the application or smoking substitute device.

The back end system may include a geographically distributed Content Delivery Network (CDN) for stored the encrypted firmware image.

The firmware update message may combine the firmware key and a communication header for the smoking substitute device in a single data structure. The signing server may be configured to encrypt the data structure using the device-specific encryption key. The communication header may include information used in the verification process, e.g. to determine the authenticity of the source of the firmware update message. The communication header may include message authentication code (MAC) data for the smoking substitute device.

The system may comprise a plurality of smoking substitute devices. The same firmware key may be used in the firmware update message for each of the plurality of smoking substitute devices. The signing server may be configured to apply a single firmware key to encrypt a firmware image, in order to provide a single encrypted firmware image. The same encrypted firmware image may thus be obtained, e.g. via the application, at each of the plurality of smoking substitute devices. However, the firmware update notifications that are provided to the smoking substitute devices may nonetheless be individually encrypted. That is, the single firmware key that is required to decrypt the single encrypted firmware image may be encrypted differently for each device, using respective device-specific encryption keys. The application on the mobile device may be configured not to have access to the device-specific encryption key or to the firmware key. Instead, the application may act as an intermediary, on a secure communication channel, between the server and the smoking substitute device. The mobile device on which the application is installed may also be configured not to have access to the device-specific encryption key or to the firmware key. That is, neither the application server nor the mobile device may have access to the device-specific encryption key or to the firmware key.

The smoking substitute device may be configured to transition into an update mode, e.g. upon receiving a suitable command from the application or application server. This may be done before the application server communicates an encrypted firmware image and a firmware update message to the smoking substitute device. The update mode may comprise a Software Update Over the Air (SUOTA) mode. The application or application server may transmit a separate message (e.g. a Ctrl message) to the smoking substitute device to cause the transition. The application or application server may be configured to communicate the encrypted firmware image and firmware update message to the smoking substitute device when the smoking substitute device is in the update mode.

The mobile device may be configured to store or 'cache' an encrypted firmware image that it receives from the server. For example, if the application (or application instance) is associated with multiple smoking substitute devices, it can use the stored encrypted firmware image to avoid repeatedly having to download the same image, for multiple smoking substitute devices.

According to a second aspect of the invention, there is provided a method for managing a system, the method comprising: encrypting, using a device-specific encryption key, a firmware update message, wherein the firmware update message includes a firmware key; transmitting the encrypted firmware update message to a smoking substitute device; obtaining, by the smoking substitute device, an encrypted firmware image; and decrypting, by the smoking substitute device using the device-specific encryption key, the firmware update message in order to obtain the firmware key, wherein the firmware key is for decrypting the encrypted firmware image.

The method may include transmitting a firmware update notification from an application server to an application on a mobile device, the firmware update notification including a firmware image location identifier and the encrypted firmware update message. The method may include receiving, at the application, the firmware update notification, and obtaining, by the application, an encrypted firmware image using the firmware image location identifier. The method may include communicating, from the application to the smoking substitute device, the encrypted firmware image and the encrypted firmware update message, wherein the firmware update message includes a firmware key for decrypting the encrypted firmware image.

The method may include decrypting, by the smoking substitute device using the device-specific encryption key, the firmware update message in order to obtain the firmware key; decrypting, by the smoking substitute device, the firmware image using the firmware key; and updating the firmware of the smoking substitute device using the decrypted firmware image.

The method may include verifying the update firmware using identification data in the firmware update message; and reporting an outcome of verification to the application. The method may be a computer-implemented method, e.g. performed using the system described above.

In another aspect, there may be provided a computer readable medium storing computer readable instructions, which when executed, cause one or more devices to operate as a system as set out above.

In another aspect, there is provided smoking substitute device comprising: a control unit; a memory configured to store firmware for operating the smoking substitute device, and to store a device-specific encryption key; and a communications interface. The smoking substitute device may be configured to obtain an encrypted firmware image, and receive, from an application server, a firmware update message. The firmware update message includes a firmware key for decrypting the encrypted firmware image. The firmware update message may be decryptable using the device-specific encryption key. The smoking substitute device may thus be configured to: decrypt, with the device-specific encryption key, the firmware update message in order to obtain the firmware key; decrypt, with the firmware key, the encrypted firmware image; and update, with the decrypted firmware image, the firmware for operating the smoking substitute device.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a), which is suitable for use in an embodiment of the invention.
**Figure 3(b)** is a schematic view of the consumable of the smoking substitute device of Fig. 2(a).
**Figures 4(a)** **and** **4(b)** depict a flow diagram of a firmware update method that are performed by aspects of a system according to an embodiment of the present invention.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

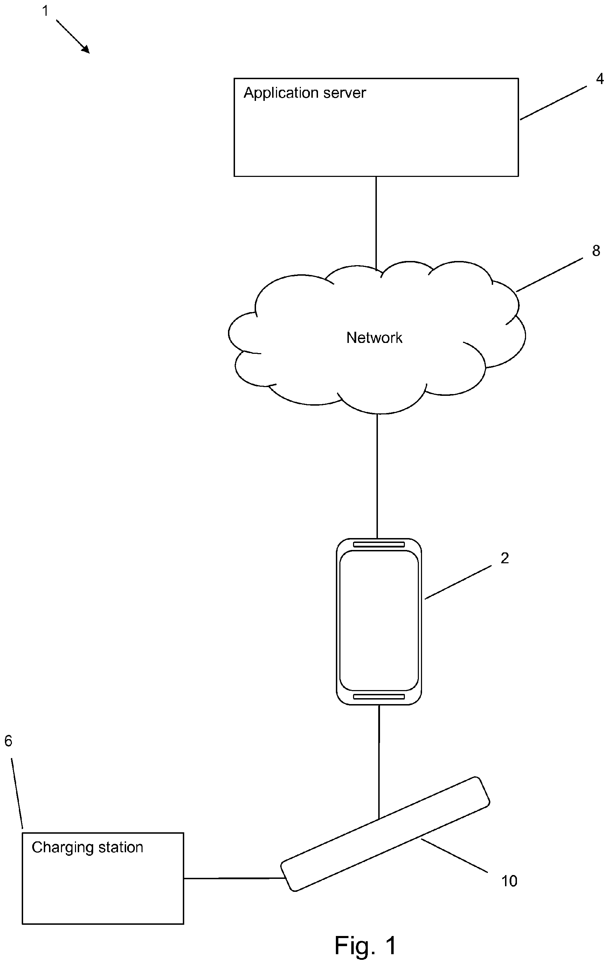

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

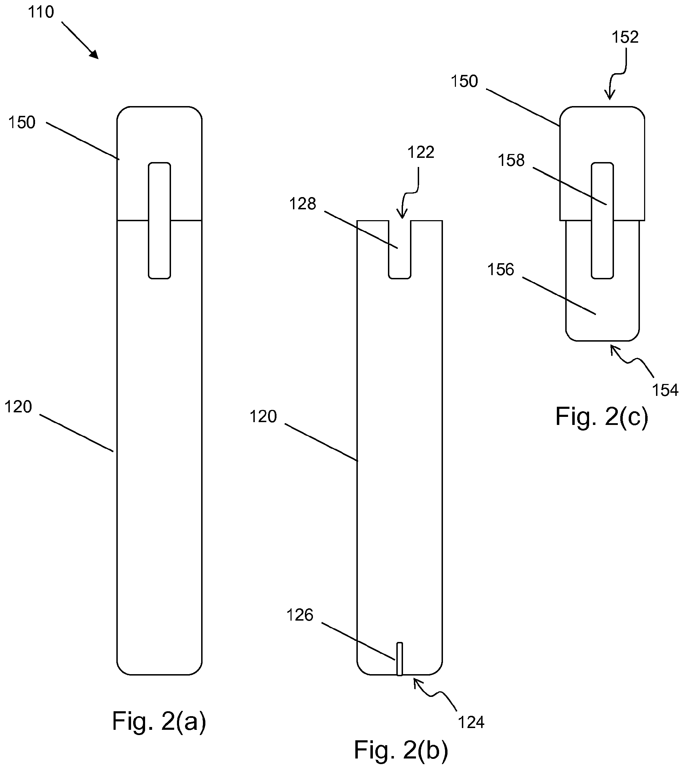

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 150 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

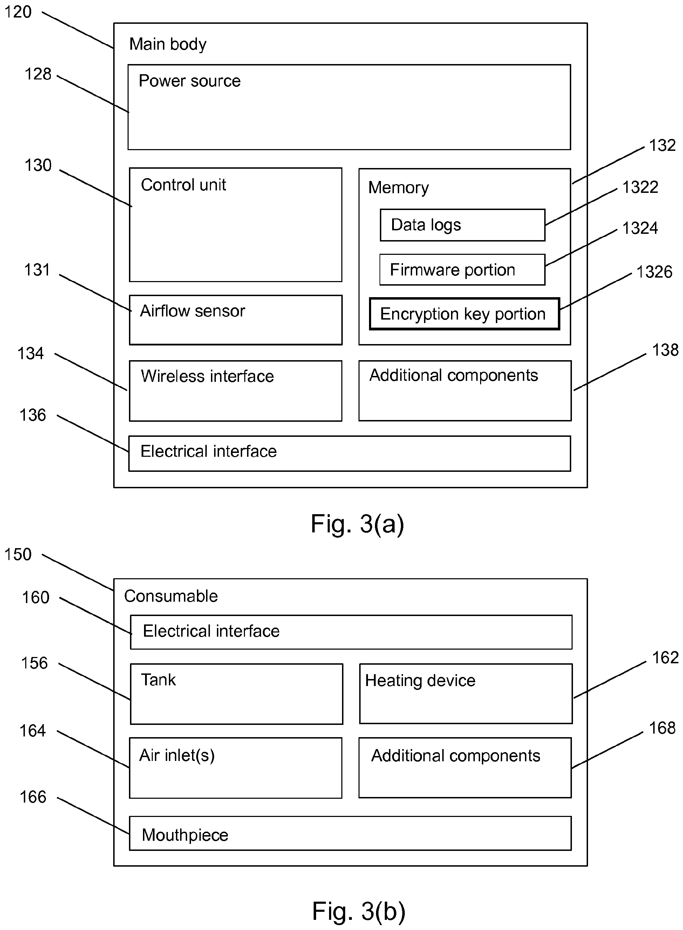

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, an airflow sensor 131, a memory 132, a wireless interface 134, an electrical interface 136, and one or more optional additional components 138.

The power source 128 is preferably a battery, more preferably a rechargeable battery.

The control unit 130 may include a microprocessor, for example.

The memory 132 is preferably includes non-volatile memory, such as flash memory or the like. The memory may include a plurality of memory portions that serve differing functions or store particular types of data. The different portions may be separate partitions or logical volumes with the same memory, or may be provided by separate physical hardware. A first portion 1324 of the memory 132 is configured to store firmware. The first portion 1324 may also be referred to herein as the "firmware portion" of the memory 132. The firmware may be stored in an encrypted form, e.g. using a first encryption key. The initial encryption and storage of the firmware may be carried out during manufacture and assembly of the smoking substitute device. The first encryption key may also be stored in the memory 132 at the manufacture stage. The first encryption key is preferably stored in a different portion of the memory to the encrypted firmware. In particular, the first encryption key may be stored in a secure portion of the memory 132, which is referred to herein as an encryption key portion 1326. Herein the term "secure portion" may refer to computer storage that is configured to prevent unauthorised access. The secure portion may be a protected region of memory, e.g. under the control of a memory protection unit that forms part of the control unit 130. The memory protection unit may control access to the memory 132, and can prohibit access to the secure portion expect under certain circumstances. Alternatively, the secure portion may be provided on an entity that is a physically or logically separate from the first portion 1324. For example, the encryption key portion 1326 may be a suitably configured hardware security module, or the like.

The memory 132 also includes data log portion 1322 for storing a data log or a plurality of data logs. The data log portion 1322 may be distinct from the firmware portion 1324 and the encryption key portion 1326. As will be understood from the detail descriptions above, various detectors and other functional components within the smoking substitute device provide operational data that can usefully be stored, monitored and in some cases used to make determinations regarding control and subsequent operations of the smoking substitute device. The data logs 1322 may include data pertaining to the operation of the power source 128, the airflow sensor 131, the wireless interface 134 and the electrical interface 136 of the smoking substitute device. The data logs, or at least some of the data within those data logs, may be transmitted to a mobile device if the smoking substitute device is paired or bonded to a mobile device. It may be desirable to protect the data logs from being hacked, altered or deleted by a non-authorised user, in order to protect the integrity of the device's operation and to keep the user's information safe and private to him or her. The data logs may thus be encrypted before storage in the memory 132. The control unit 130 may be configured to use a second encryption key stored within the encryption key portion 1326 for this purpose.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The airflow sensor 131 is configured to detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor.

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 may include an accelerometer configured to function as a motion sensor to receive inputs for controlling the device.

The additional components 138 of the main body 120 may include a reader configured to read information associated with the consumable from a machine readable data source included in (e.g. contained in the body of, or attached to) the consumable 150.

The reader may be configured to read information from the machine readable data source wirelessly, e.g. via electromagnetic waves or optically. Thus, for example, the machine readable data source included in the consumable 150 could be an RFID tag (in which case the reader included in the main body 120 may be an RFID reader) or a visual data source such as a barcode (in which case the reader included in the main body may be an optical reader, e.g. a barcode scanner). Various wireless technologies and protocols may be employed to allow the reader to wirelessly read information from a machine readable data source included in or attached to the consumable 150, e.g. NFC, Bluetooth, Wi-Fi, as would be appreciated by a skilled person.

For avoidance of any doubt, the reader (if present) may be configured to read information from the machine readable data source non-wirelessly, e.g. using a direct electrical connection between the main body 120 and consumable 150.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reader configured to read information associated with the consumable from the machine readable data source.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

The present invention relates to a technique of performing a wireless update of firmware stored in the memory 132 of the smoking substitute device 110. The firmware may comprise software that comprises instructions for operation of the smoking substitute device, which can be executed by the control unit 130 to control operation of the smoking substitute device 110. In the invention, a firmware update originates at the server-side of the system 1 shown in Fig. 1, e.g. at the application server 4 or on a development server that may be associated with the application server 4. The server-side may be referred to generally herein as a "back end" of the system, and a "back end server" may refer generally to a server that operates on the server side of the system 1.

The invention is concerned with a wireless firmware procedure in which a firmware update (also referred herein as a firmware image) is communicated wirelessly to the smoking substitute device by an application running on a mobile device using a wireless communication link established between the smoking substitute device and the mobile device. The application running on the mobile device is in communication with the back end of the system.

The firmware updates may be issued for a variety of reasons. For example, a firmware update may fix errors or bugs that have been detected in the current firmware, and/or it may improve the efficiency of the device's operation and/or provide additional functionality to the smoking substitute device. A firmware update may also be required in order to enable the smoking substitute device to interface more effectively with an application running on a mobile device, for example if the application software or operating system of the mobile device has also been updated or changed.

The firmware update process discussed herein is particularly suitable for updating multiple smoking substitute devices. For example, a given firmware update may be applicable to some or all of a set of existing devices of a particular brand, type, make or model. Embodiments of the invention aim to provide a firmware update process for multiple device that is both efficient (in terms of processing load at the back end) and secure (in terms of prevent access to an unencrypted firmware image by unauthorised devices). This is achieved by using the same encrypted firmware image (stored in the back end) for an update on multiple smoking substitute devices. Security is preserved in this scheme by providing the key for decrypting the firmware image (referred to herein as the "firmware decryption key") to each smoking substitute device in a data structure that is encrypted with a device-specific key (e.g. the firmware encryption key mentioned above). The data structure in which the firmware decryption key is provided may be a header be within a header of a message sent to the smoking substitute device from the application running on the mobile device to trigger a firmware update procedure.

By encrypting the firmware decryption key with device-specific key, the mobile device cannot access the firmware decryption key as part of the firmware update process. This means that the mobile device cannot access a decrypted version of the firmware update image, even when that image is relayed to the smoking substitute device via the application running on the mobile device.

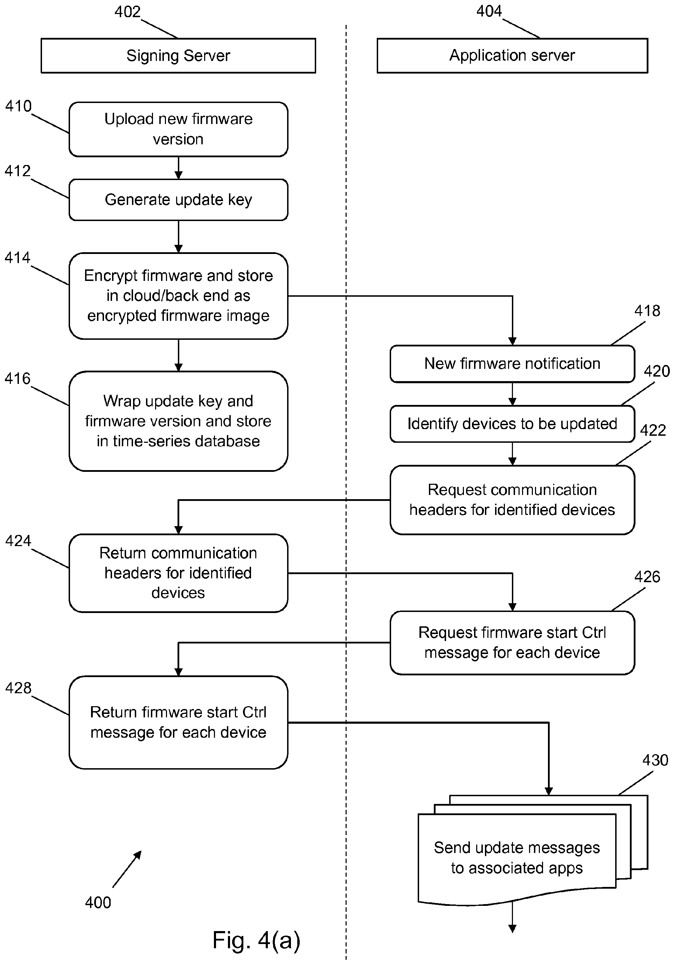

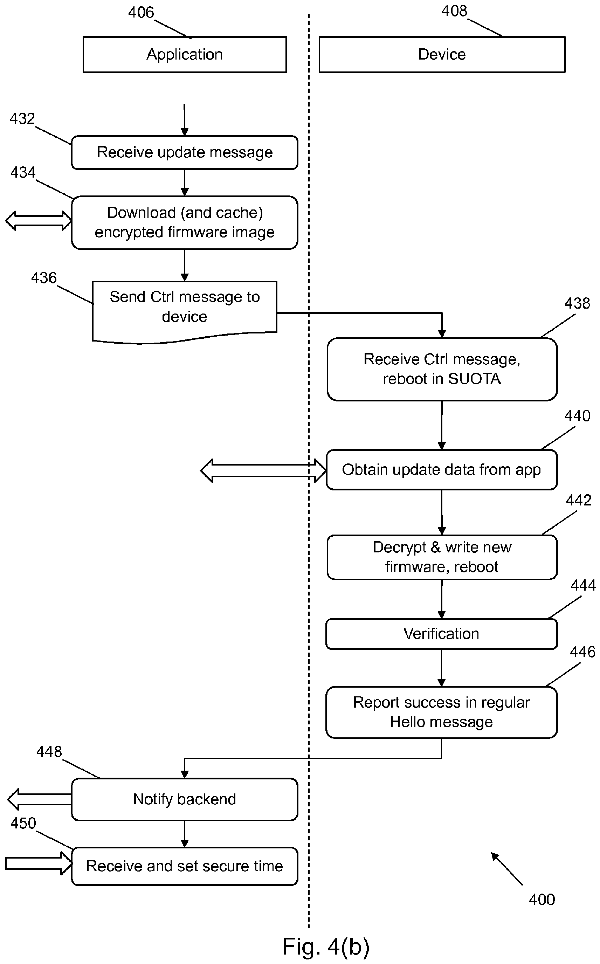

The back end of the system 1 may comprise several different computing devices (e.g. different servers or other processing entities). These different devices may be physically or logically separated from each another. For example, they may comprise distinct hardware devices. In the process flow depicted in Figs. 4(a) and 4(b) below, the back end comprises a software signing server 402 and an application server 404. The signing server 402 may be configured to operate as a central control entity for providing firmware updates for one or more smoking substitute devices. The application server 404 may correspond to the application server 4 discussed above with reference to Fig. 1. As discussed below, the application server 404 may not be involved with encryption or decryption of a firmware update but is operable to communicate with an application that is running on a mobile device, e.g. in order to control an update procedure.

More generally, a user of a smoking substitute device never sees or directly interacts with the application server 404. Instead, the user interacts with the "front end" of the system (i.e. the application running on the mobile device), usually via one or more user interfaces of the mobile device on which the application is running.

A firmware update process 400 that is an embodiment of the invention is now discussed with reference to Figs. 4(a) and 4(b). The process steps in Figs. 4(a) and 4(b) are associated with various system entities.

In this example, the system entities include the signing server 402 and the application server 404 discussed above, as well as (in Fig. 4(b)) an application 406 running on a mobile device (such as the mobile device 2 shown in Fig. 1) and a smoking substitute device 408 (such as the device discussed above with reference to Fig. 3(a)). Fig. 4(b) shows a single application 406 but it can be understood that this process is applicable to multiple application instances running on a plurality of mobile devices. Similarly, a single smoking substitute device 408 is shown in Fig. 4(b), but it can be understood that the process can also apply to a plurality of smoking substitute devices. For example, one application 406 (on a single mobile device) may be used to update a plurality of smoking substitute devices. Or each smoking substitute device may be associated with an application running on one (or more) mobile devices.

In a development of this embodiment, the application server 404 may communicate directly with the smoking substitute device 408, i.e. the application 406 may run on the smoking substitute device such that a separate intermediary (e.g. the mobile device) is not required. In the discussion below, it is therefore to be understood that the functions described with reference to the application 406 can be performed on the smoking substitute device itself.

Where the application 406 is on a separate mobile device, the smoking substitute device 408 and the mobile device have Bluetooth™ interfaces, for wirelessly communicating with one another. The manner in which wireless communications are sent and received between devices is well known and will not be discuss in detail herein. In one example, the smoking substitute device 408 is configured to form a bonded wireless communication link, with a mobile device 2. The protocols for forming bonded Bluetooth™ links are generally well known, to the skilled reader, but are nonetheless described in brief below.

In this embodiment the user selects a mobile device 2 that he or she would like to be bonded to the smoking substitute device 408 and usually downloads an application for managing the smoking substitute device 408, on to the mobile device 2, before the mobile device 2 is bonded to the smoking substitute device 408. However, it is not essential to download the application before the bonding process happens - it can be done afterwards instead. The user activates the Bluetooth™ wireless interface of the smoking substitute device 408, so that it emits an advertising message, seeking a mobile device 2 to bond with. The user will also activate the Bluetooth™ wireless interface of the mobile device 2, so that it can receive the advertising message from the smoking substituted device 410 and respond thereto by identifying itself to the smoking substitute device 408. The two devices will then share pairing encryption keys with one another.

When the smoking substitute device 408 and the mobile device 2 have received and accepted one another's pairing encryption keys, a paired wireless communication link is formed between them. The paired wireless communication link is an exclusive link, meaning that the devices will each direct subsequent wireless communication signals only to one another (unless the user instructs otherwise, either directly at the smoking substitute device 408 or via the application - but those methods will not be discussed in detail herein.) The two devices will remember one another's pairing encryption keys and reuse them each time a wireless connection is to be formed between them - this remembering and reusing of the pairing encryption keys establishes a bonded wireless communication link between the two devices.

Once it has been bonded thereto, the smoking substitute device 408 can begin to transmit wireless messages to, and receive wireless messages from, the mobile device 2. The wireless messages transmitted by the smoking substitute device 408 can comprise commands or requests, issued to the mobile device 2 and/or to an application that is running on the mobile device 2. The wireless messages transmitted by the smoking substitute device 408 can also comprise data relating to the usage of the smoking substitute device 408. For example, the smoking substitute device 408 may be configured to regularly transmit a data log comprising data obtained from the airflow sensor 131 within the smoking substitute device 408, to the mobile device 2. That data obtained from the airflow sensor 131 can be accessed by the application, running on the mobile device 2, and used *inter alia* to monitor user smoking substitute behaviour patterns.

As mentioned above, it is likely to be appropriate (and perhaps necessary) to update the firmware of a smoking substitute device 408 during its operational life. For example, updated firmware may enable the device 408 to perform different, or additional, functions, and/or it may improve its operational efficiency and/or it may address so-called 'bugs' or other problems that have been detected, inherent to the first version of the firmware.

A firmware update process may thus begin with a step 410 of uploading a new version of firmware software to the signing server 402. The new version may be developed in a separate back end entity, e.g. by the manufacturer or an associated developer that is responsible for maintaining the software. As mentioned above, the signing server 402 behaves, according to this embodiment, as a central control entity for the firmware update.

The signing server 402 may be configured as a secure entity that generates and stores the keys used for encrypting data used in the firmware update process. The update process thus continues with a step 412 of generating a AES (Advanced Encryption Standard) key for the new version of the firmware software. Although AES is using in this example, any suitable symmetric encryption process may be used. Because the encryption process is symmetrical, the same AES key can be used for decryption, and hence the AES key may be referred to herein as the firmware decryption key. In principle any type of encryption may be applied as long as the signing server 402 generates a firmware decryption key that can be communicated to devices to perform decryption. The firmware decryption key may be common to all smoking substitute devices 408 to which the firmware update is to be applied.

The update process then continues with a step 414 of encrypting the new version of the firmware software and storing the encrypted firmware image in suitable memory means within the back end. The encrypted firmware image may be stored in a manner that means it is readily accessible to be downloaded by the application on a mobile device associated with a smoking substitute device to be updated. For example, the encrypted firmware image may be stored in BLOB (Binary Large Object) storage or a content distribution network (CDN), e.g. in the cloud.

To ensure security at the signing server 402, the process may include a step 416 of wrapping the firmware decryption key and firmware image using an suitable security software to prevent access by unauthorised applications or other devices. The wrapped key may be stored in a dedicated hardware security module, or may be wrapped via "Azure Key Vault", which is a known software security product. The wrapped key may be stored within a suitable time-series database that is within (or associated with) the signing server 402. The database may be a column-based relational time series database such as a KDB database, that is capable of processing large data sets at high speed.

The update process continues with a step 418 in which the signing server 402 issues a communication to the application server 404, to notify the application server 404 of the existence of new or updated firmware. The manner in which the two servers 402, 404 communicate with one another will depend on the particular details of the two servers 402, 404, but the skilled reader will appreciate that such communication can be achieved by a suitable combination of hardware and software, and may be via either a wired or wireless connection.

At step 420, the application server 404 identifies the smoking substitute devices that are to be updated. This may comprise identifying the particular devices that embody a specific make, model, generation or type of smoking substitute device, that the manufacturer/developer has previously created. Step 420 may comprise identifying devices that were manufactured within a certain time period, or whose firmware was last updated more than a predefined time ago. The notification that the backend server 404 has received at step 418, from the signing server 402, may have included, or been accompanied by, an indicator to inform the application server 404 as to which type or group of smoking substitute devices the update should apply to. The application server 404 may, at step 420, access one or more database(s) and identify the individual devices. As a result of this step, the application server 404 may generate a set of device identities that will be upgraded to the new firmware software version.

At step 422, the application server 404 requests a communication header for each of the identified devices from the signing server 402. At step 424 the communication headers for the identified devices are returned by the signing server 402 to the application server 404. The communication header may be a data structure capable of addressing a message to a given device. For example, the communication header may comprise MAC (message authentication code) information for each device to be update. The communication header (authentication code) for each individual device and the firmware decryption key may form a common data structure (also referred to herein as a firmware update message) to be sent to each device, wherein the common data structure is encrypted by the signing server 402 using a device-specific encryption key. Thus, each device may receive a uniquely encrypted data structure that includes the firmware decryption key.

The device-specific encryption may be performed using the first encryption key discussed above. This means that the application server 404 cannot itself decrypt the communication header, nor can it access the firmware decryption key. But it can include the encrypted communication headers in its subsequent communications to the smoking substitute devices, via the application, as detailed below.

At step 426, the application server 404 submits a request to the signing server 402, asking for the control (Ctrl) message that must be sent to each device, in order to start the firmware update process. The signing server provides the requested Ctrl messages, for each device, at step 428. The Ctrl message is provided in a form that is accessible (e.g. readable) by the application server. For example, it may be encrypted by the signing server 402 in a way that permits decryption at the application server 404. Encryption of communication between the signing server 402 and application server 404 may ensures that the application server 404 acts only on authorised information.

At step 430, the application server 404 sends a message to the application 406 running on a mobile device (see Fig. 4(b)). The application server 404 may transmit a message for each smoking substitute device that is to be updated. This message is received by each application 406 at step 432. Again, the possible ways in which a server communicates with an application are well known and will not be discussed in detail herein. The communication is via any suitable network, for example 4G or Wi-Fi, and may comprise a cloud-to-device message, if the application server 404 comprises a cloud-based server.

The message sent and received at steps 430 and 432 may be or be similar to a JSON (JavaScript Object Notation) envelope for a known type of Ctrl message. The message comprises the Ctrl message that the application server 404 has retrieved for each smoking substitute device at step 428. However, in this example, the message also includes the following additional information to assist in the firmware update process:
- an indication of which version of the software is to be provided, via the intended update.
- a location identifier for the encrypted firmware image (e.g. CDN URL or the like), which the application 406 can subsequently use to download the encrypted firmware image.
- the encrypted common data structure that comprises the firmware decryption key and the communication header.

The application 406 cannot decrypt the common data structure, and therefor does not have access to the firmware decryption key or the communication header.

At step 434, each application instance 406 that receives an update message downloads the encrypted firmware image using the location identifier. The application 406 may cache the encrypted firmware image (i.e. in a buffer or cache memory on the mobile device). This may enable an application instance 406 to update multiple smoking substitute devices without having to repeatedly retrieve the encrypted firmware image. The ability to use cached version of the encrypted firmware image is made possible because the same firmware decryption key is used across multiple devices. There would be no benefit in caching an encrypted firmware image in an update process in which the firmware image is uniquely encrypted for each device.

At step 436, each application instance 406 sends the Ctrl message that it has obtained (from the signing server 402, via the application server 404) for its respective smoking substitute device 408, to that smoking substitute device 408. In this particular embodiment the application 406 communicates with the smoking substitute device 408 via the bonded wireless communication link that has been established between the smoking substitute device 408 and the mobile device on which the application 406 is installed.

At step 438, the smoking substitute device 438 receives the Ctrl message and, as a result, the smoking substitute device 408 reboots (or restarts) itself in a pre-configured SUOTA (Software Update Over The Air) mode. The skilled reader will appreciate that the reading of the Ctrl message, and subsequent rebooting of the smoking substitute device in SUOTA mode, will be controlled by the control unit 130, which in this embodiment comprises a microprocessor. Any suitable combination of hardware and software means can be employed, within the smoking substitute device 408, in order for the microprocessor 430 to execute the necessary steps to read, understand and act in response to the received Ctrl message.

Once it is operating in SUOTA mode, the smoking substitute device 408 obtains the encrypted firmware image, version indicator, and encrypted common data structure from the application 406. Again, this information is transmitted via the bonded wireless communication link that has been established between the smoking substitute device 408 and the associated mobile device, on which the application 406 is installed.

At step 442, the smoking substitute device 408 uses its stored device-specific encryption key in order to decrypt the encrypted common data structure that it has obtained from the application 406. Once the common data structure is decrypted, the smoking substitute device can decrypt and store the firmware image using the firmware decryption key and perform a verification process using the communication header.

In detail, the smoking substitute device 408 may program (i.e. write or otherwise store) the decrypted firmware image into the firmware portion 1324 of the memory 132. As mentioned above, the firmware should be stored securely within the firmware portion 1324 of the memory, wherein the firmware portion 1324 is separate to other sections of the memory such as the data log portion 1322, and is not accessible to the user or to the application running on the corresponding mobile device or to any other devices, to ensure that the integrity of the new firmware is maintained, whilst it is in use for controlling the operation of the smoking substitute device 408.

In common with conventional firmware update procedure, the smoking substitute device 408 may be configured to overwrite an invalid previous firmware image with the new firmware image. If no invalid image is present, the smoking substitute device 408 may be configured to overwrite the oldest firmware image that it has stored in its memory. According to the present embodiment, the smoking substitute device 408 is configured to retain the most recent previous firmware image in the firmware portion 1324, after it has been updated with a new firmware image, unless that most recent previous firmware image is invalid. In some embodiments, several previous firmware images will be stored within the memory of the smoking substitute device at least for a pre-determined period of time and or up to a predetermined maximum number of previous firmware images. When the pre-determined period of time has finished or when the pre-determined maximum number of stored previous firmware images has been reached, the next new firmware image that the smoking substitute device receives will replace the oldest stored previous firmware image within the memory.

Step 442 further includes rebooting or restarting the smoking substitute device 408 after the new firmware image has been programmed into the firmware portion 1324 of the smoking substitute device's memory 132. The smoking substitute device 408 may reboot using the updated firmware and become available for normal operation.

The smoking substitute device 408 is configured so that, as soon as it restarts after a firmware update, it runs a step 444 of verifying the new firmware image. This is to ensure that the new firmware image has come from an authentic source and does not comprise any bugs or errors. If the verification yields a positive result, indicating that it has verified the new firmware image, the control unit 130 is configured to automatically 'run' the new firmware, in order to operate the device 408 in accordance with its instructions. If, however the verification yields a negative result, indicating that it has not verified the new firmware image, the control unit 130 is configured to automatically revert back to running the most recent previous firmware image.

As will be known to the skilled reader, when two Bluetooth™ interfaces are have a bonded wireless communication link between them, as is the case for the smoking substitute device 408 and the mobile device running the application in the present embodiment, those interfaces are configured to submit regular messages to one another - which can be referred to as 'hello' messages - in order to regularly open up the communication link and maintain it as active. At step 446 of the method in the present embodiment, the smoking substitute device 408 is configured to report the success (or, as may be the case, the failure) of the attempted firmware update to the application 406. In this embodiment, the message reporting the outcome of the attempted firmware update also includes the decrypted new firmware image.

At step 448, when the application 406 has received notification that the firmware update has been successful, the application 406 notifies the backend server 404. This notification may include information identifying the firmware update, e.g. its version number or the like.

In response to receiving notification that the firmware update has been successful, the application server 404 issues a command, to the application 406, at step 450, to set the secure time on the smoking substitute device 408. This is an example of a secure command that can be relayed between the smoking substitute device 408 and the backend (e.g. application server 404) via the application 406 in a way that can reduce or eliminate any security concerns that may be inherent with the use of an application on a mobile device that is outside the control of the backend.

Thus, a sophisticated system and method is provided, for updating the firmware for a smoking substitute device in a secure and streamlined manner. The method is secure because the backend server and the application (and the mobile device on which the application is running) do not have access to the new firmware image, except in encrypted form. The method is streamlined because the signing server only has to encrypt and distribute one firmware image per update, no matter how many devices that update is applicable to. This reduces processing burden on the signing server and application server. The method also reduces the amount of data that an application instance would have to download from the servers, if a single application instance is used to connect to multiple smoking substitute devices. The only thing that is encrypted separately for each device is the newly-generated encryption key that has been used by the signing server to encrypt the new firmware image. That newly-generated encryption key is stored in communications headers for each device, wherein each communications header is separately encrypted with a device-specific encryption key that only the signing server and the smoking substitute device have access to.

It will be appreciated that, in alternative embodiments of the present invention, variations are possible as compared to the specific embodiment described hereabove. For example, the memory of a smoking substitute device may comprise different, and/or additional, sub-divisions or portions. For example, the portion of the memory that stores the firmware may be accessible in circumstances other than the particular circumstances described in detail above, for updating the firmware. But, as a general principle, firmware should usually be protected from being changed by end users, except as prescribed by the manufacturer or firmware developer.

A single instance of the application (running on a single mobile device) may be configured to communicate with more than one smoking substitute device. That application instance may be configured to provide firmware updates to each of a plurality of smoking substitute devices, wherein the communication headers for those firmware updates are each encrypted with a different respective device-specific encryption key.

The encryption key that is newly-generated and use to decrypt the new firmware image may be of a different type, other than an AES key. It may be referred to generally as a firmware key. In general, the encryption and decryption methods employed in the described method may be in accordance with any suitable or standard protocol.

The smoking substitute device does not have to form a bonded wireless communication link with the mobile device on which the application ins installed. But there should preferably be some security or identification steps followed, before the smoking substitute device accepts firmware update messages from the application, via the wireless interface of a mobile device.

Terms such as "firmware", "signing server", "backend server", "firmware portion", "data log portion", "encryption key portion", "SUOTA" and so on, are intended to be illustrative of the functions described herein only and need not to be limited to specific type of device or structure.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A system for managing a smoking substitute device, the system comprising:
a smoking substitute device comprising:
a control unit;
a memory configured to store firmware for operating the smoking substitute device and a device-specific encryption key; and
a communications interface; and
an application server configured to communicate to the smoking substitute device a firmware update message that is encrypted with the device-specific encryption key,
wherein the smoking substitute device is configured to obtain an encrypted firmware image,
wherein the firmware update message includes a firmware key for decrypting the encrypted firmware image, and
wherein the smoking substitute device is configured to use the device-specific encryption key to decrypt the firmware update message, to obtain the firmware key for decrypting the encrypted firmware image.

2. The system of claim 1, wherein the application server is configured to communicate a firmware update notification that includes a firmware image location identifier and the firmware update message, and wherein the encrypted firmware image is obtainable using the firmware image location identifier.

3. The system of claim 1 or 2 further comprising a mobile device on which an application is installed, wherein the smoking substitute device is in wireless communication with the mobile device via the communications interface, wherein the application server is configured to be communicate to the smoking substitute device via the application.

4. The system of claim 1 or 2, wherein the smoking substitute device is in wireless communication with the application server.

5. The system of any preceding claim, wherein the smoking substitute device is further configured to:
decrypt the encrypted firmware image using the firmware key; and
update the firmware for operating the smoking substitute device using the decrypted firmware image.

6. The system of claim 5, wherein the smoking substitute device is further configured to:
verify the update firmware using identification data in the firmware update message; and
report an outcome of verification.

7. The system of claim 6, wherein the smoking substitute device has a wireless communication link with an application server or a mobile device running an application, and wherein the outcome of verification is reported in a hello message sent via the wireless communication link.

8. The system of any preceding claim further comprising a signing server in communication with the application server, wherein the signing server is configured to encrypt the firmware image with the firmware key, and wherein access to the firmware key by the application server is prohibited.

9. The system of any preceding claim, wherein the system comprises a plurality of smoking substitute devices, and wherein the same firmware key is included in the firmware update message for each of the plurality of smoking substitute devices.

10. The system of any preceding claim, wherein the smoking substitute device is configured to transition into an update mode, and wherein the smoking substitute device is configured to receive the encrypted firmware image and firmware update message when in the update mode.

11. A method for managing a system, the method comprising:
encrypting, using a device-specific encryption key, a firmware update message, wherein the firmware update message includes a firmware key;
transmitting the encrypted firmware update message to a smoking substitute device;
obtaining, by the smoking substitute device, an encrypted firmware image; and
decrypting, by the smoking substitute device using the device-specific encryption key, the firmware update message in order to obtain the firmware key,
wherein the firmware key is for decrypting the encrypted firmware image.

12. The method of claim 11 further comprising:
decrypting, by the smoking substitute device, the firmware image using the firmware key; and
updating the firmware of the smoking substitute device using the decrypted firmware image.

13. The method of claim 12 further comprising:
verifying the update firmware using identification data in the firmware update message; and
reporting an outcome of verification.

14. A smoking substitute device comprising:
a control unit;
a memory configured to store firmware for operating the smoking substitute device, and to store a device-specific encryption key; and
a communications interface;
wherein:
the smoking substitute device is configured to obtain an encrypted firmware image;
the smoking substitute device is configured to receive, from an application server, a firmware update message;
the firmware update message includes a firmware key for decrypting the encrypted firmware image; and
the firmware update message is decryptable using the device-specific encryption key.

15. The smoking substitute device of claim 14, wherein the smoking substitute device is configured to:
decrypt, with the device-specific encryption key, the firmware update message in order to obtain the firmware key;
decrypt, with the firmware key, the encrypted firmware image; and
update, with the decrypted firmware image, the firmware for operating the smoking substitute device.
